# EUROPÄISCHE PATENTSCHRIFT

(11) **EP 0 525 698 B1**
(45) Veröffentlichungstag und Bekanntmachung des Hinweises auf die Patenterteilung: **15.03.1995**
(21) Anmeldenummer: 92112784.1
(22) Anmeldetag: 27.07.1992
(51) Int. Cl.: G01N 1/16, E21B 49/00, G01N 1/22, F04B 47/02

(54) **Messproben-Entnahmevorrichtung**
Device for collecting measurement samples
Dispositif de prélèvement d'échantillons de mesure

(30) Priorität: 30.07.1991 DE 4125141
(43) Veröffentlichungstag der Anmeldung: 03.02.1993
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- AU-B- 548 335
- US-A- 3 103 813
- US-A- 3 277 723
- US-A- 4 538 683
- US-A- 4 669 536

## Beschreibung

Die Erfindung betrifft eine Meßproben-Entnahmevorrichtung für mehrere, voneinander entfernte Meßstellen, insbesondere für Grundwasser- oder Bodenluftuntersuchungen, umfassend
a) ein in eine Bodenöffnung einbringbares Mantelrohr mit einer mindestens in den vorgesehenen Meßstellenbereichen gas- und flüssigkeitsdurchlässigen Wandung;
b) in das Mantelrohr jeweils zwischen den einzelnen Meßstellenbereichen einsetzbare Querwandungen mit verschließbaren Öffnungen für Meßleitungen und einen Pumpeinheitsstrang;
c) einen mehrere koaxial angeordnete Pumpeinheiten aufweisenden Pumpeinheitsstrang, bei welchem die Antriebe aller Pumpeinheiten miteinander und mit einer gemeinsamen Antriebsvorrichtung gekoppelt sind;
d) die Verbindung jeder Pumpeinheitskammer des Pumpeinheitsstranges über ein Wechselventil mit einer jeweils in einem Meßstellenbereich endenden Saugleitung und mit einer jeweils zu einer gesonderten Probenentnahmestelle führenden Druckleitung.

Eine derartige Meßproben-Entnahmevorrichtung ist aus der AU-B-548 335 bekannt. Diese Anordnung ist jedoch im Aufbau relativ kompliziert und aufwendig im Bezug auf ihre Steuerung.

Der Erfindung liegt daher die Aufgabe zugrunde, eine Meßproben-Entnahmevorrichtung der eingangs genannten Art besonders wirkungsvoll und betriebssicher zu gestalten.

Die gestellte Aufgabe wird mittels einer gattungsgemäßen Meßproben-Entnahmevorrichtung erfindungsgemäß dadurch gelöst, daß die Pumpeinheiten als Zylinder ausgeführt sind, bei welchen die Kolbenstangen aller Zylinder miteinander und mit einer gemeinsamen Antriebsvorrichtung gekoppelt sind.

Mit der erfindungsgemäß ausgebildeten Meßproben-Entnahmevorrichtung lassen sich gleichzeitig Proben an entlang einer geradlinigen Meßstrecke in beliebigen oder passenden Abständen voneinander entfernten Meßstellenbereichen entnehmen. Für den eingangs genannten bevorzugten Anwendungszweck verläuft diese Meßstrecke im allgemeinen in vertikaler Richtung, beispielsweise entlang eines Brunnenrohres in dem aufgefüllten Ringraum zwischen Brunnenrohr und Schachtwandung. Sie kann aber auch in anderen Richtungen, selbst in horizontaler Richtung verlaufen. Das Mantelrohr bildet nicht nur die Auskleidung einer geschaffenen, insbesondere gebohrten Bodenöffnung, sondern dient gleichzeitig zur Stabilisierung des verwendeten Zylinderstranges, der über die Querwandungen an dem Mantelrohr sicher abgestützt ist. Die einzelnen Meßbereiche lassen sich genau festlegen.

Alle Zylinder des Zylinderstranges werden gleichzeitig betätigt, wobei sie in der einen Kolbenhubrichtung jeweils Gase oder Flüssigkeit über die zugeordneten Wechselventile an den einzelnen Meßstellenbereichen ansaugen und nach einer Hubumkehr der Kolben die vorher angesaugten Gase oder Flüssigkeiten in gesonderte Druckleitungen fördern, die jeweils zu einer Probenentnahmesteile führen. Die durch das gegenseitige Koppeln ihrer Kolbenstange zu einer zusammengesetzten gemeinsamen Kolbenstange von einer passenden gemeinsamen Antriebsvorrichtung gleichzeitig betätigten Zylinder müssen nicht unmittelbar aufeinanderfolgend miteinander gekoppelt, beispielsweise verschraubt sein, sondern sie können entsprechend den gegenseitigen Entfernungen der mehreren Meßstellenbereiche mit Abstand voneinander und mit dazwischenliegenden Distanzrohren miteinander zu dem Zylinderstrang kombiniert sein. Für die Zylinder können marktgängige Zylinder passender Größe mit einer oder mehreren Zylinderkammern Verwendung finden. Auch können marktgängige Wechselventile eingesetzt werden. Der Mantelrohreinsatz läßt sich als Ganzes entnehmen.

Das Mantelrohr kann durchgehend als gas- und flüssigkeitsdurchlässiges Rohr ausgebildet sein, wobei dann die einzelnen Meßstellenbereiche ausschließlich durch die in das Mantelrohr eingebrachten Querwandungen voneinander getrennt sind. Es kann aber auch ein Mantelrohr verwendet werden, das nur abschnittsweise gas- und flüssigkeitsdurchlässig gestaltet ist, so daß die einzelnen Meßstellenbereiche nicht nur durch die inneren Querwandungen im Mantelrohr, sondern auch noch durch undurchlässige Mantelrohrabschnitte voneinander getrennt sind. In jedem Fall kann das Mantelrohr aus einzelnen-Abschnitten, aber mit einer stufenfrei durchlaufenden Innenwandung, zusammengesetzt sein.

Es hat sich als vorteilhaft erwiesen, die Querwandungen als kolbenartige, mit Umfangsdichtlippen versehene Wandungskörper auszubilden und auf dem Zylinderstrang zu verankern, so daß sie zusammen mit dem Zylinderstrang in das vorher in eine Bodenöffnung eingebrachte Mantelrohr eingeschoben werden können. Hierbei kann der Zylinderstrang sich auch außermittig durch die Querwandungskörper erstrecken, wodurch sich die Anordnung von weiteren, für die aus dem Mantelrohr herauszuführenden Druckleitungen oder in andere Meßbereiche zu führende Saugleitungen erforderlichen Durchgangsöffnungen in den Querwandungskörpern erleichtert.

Eine erfindungsgemäß ausgebildete Meßproben-Entnahmevorrichtung hat den zusätzlichen Vorteil, daß sie sich leicht an unterschiedliche Meßbedingungen anpassen läßt. So kann die gemeinsame Antriebsvorrichtung für die Kolbenstangen mit einer Bewegungssteuereinrichtung und/oder einer automatischen Steuereinrichtung für die Kolbenstangen-Hubumkehr versehen sein, so daß die Betätigung der Zylinder beispielsweise an die Fließgeschwindigkeit des Grundwassers an den Meßstellen dergestalt angepaßt werden kann, daß in den Meßbereichen die Bildung von Druckdifferenzen vermieden werden, durch welche auch Grundwasser oder Gase aus benachbarten Bodenbereichen in unerwünschter Weise miterfaßt werden könnten. In unter Druck stehenden Meßbereichen tritt beim langsamen Saughub der Anordnung ein langsames Nachdringen von Grundwasser oder Gasen in den sich vergrößernden Zylinderraum ohne Erzeugung eines Unterdruckes im Meßbereich auf. Die Gefahr der Veränderung einer Probe durch Druckänderungen entfällt. Das Mantelrohr kann auch als Träger für zusätzliche Vorrichtungsteile Verwendung finden, beispielsweise für Schwingungserzeuger, die gemäß dem Patent 39 31 012 der Anmelderin geeignet sind, in angrenzende Bodenbereiche mechanische Schwingungen begrenzter Energie abzugeben, die in den Kapillaren der Bodenschichten molekulare Gas- und/oder Flüssigkeitsbewegungen auslösen können.

Die Vorrichtung der Erfindung kann auch in offenen Gewässern eingesetzt werden, wobei hierzu das Mantelrohr zweckmäßigerweise mit einen Schwimmer ausgestattet ist. Es lassen sich hiermit Wasserproben in unterschiedlichen Gewässertiefen entnehmen. So kann insbesondere der vor allem für die Fischzucht wesentliche Sauerstoffgehalt der einzelnen Gewässerschichten kontrolliert werden. Weitere Vorteile ergeben sich, wenn das Mantelrohr und gegebenenfalls auch die Distanzrohre zwischen den Zylindern aus einem durchsichtigen Material gefertigt sind und in das Mantelrohr eine Kamera und/oder andere optische Einrichtungen zur Beobachtung der Wasserströmung einführbar sind.

Nachfolgend wird ein Ausführungsbeispiel einer erfindungsgemäß ausgebildeten Entnahmevorrichtung für mehrere Meßproben anhand der beiliegenden schematischen Zeichnung näher erläutert.

Im einzelnen zeigen:
- Fig. 1: eine schematische Übersichtsdarstellung einer eingesetzten Meßproben-Entnahmevorrichtung;
- Fig. 2: eine gegenüber Fig. 1 vergrößerte Teildarstellung des oberen Teils der Meßproben-Entnahmevorrichtung im zentralen Längsschnitt durch das Mantelrohr und dem Zylinderstrang.

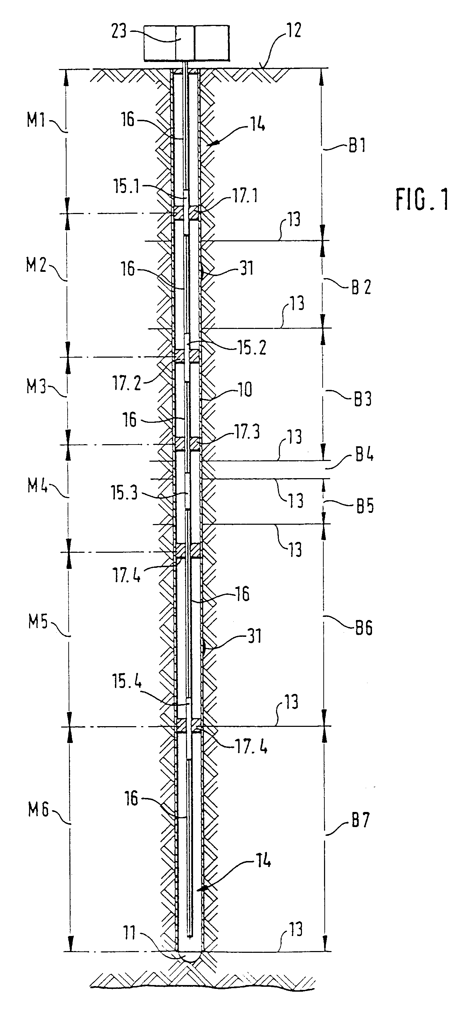

Fig. 1 zeigt ein kreiszylindrisches Mantelrohr 10, das in eine Brunnenbohrung 11 eingesetzt ist. Die Brunnenbohrung 11 erstreckt sich von der Erdoberfläche 12 aus durch verschiedene Bodenschichten B1-B7 hindurch, deren Trennungslinien mit der Bezugsziffer 13 bezeichnet sind. In das Mantelrohr ist ein Zylinderstrang 14 eingesetzt, der beim gewählten Ausführungsbeispiel vier Zylinder 15.1-15.4 aufweist, die zusammen mit koaxialen Distanzrohren 16 den Zylinderstrang 14 bilden. Auf dem Zylinderstrang 14, vorzugsweise auf Zylindern 15 der Zylinder/Kolbenanordnungen, sind Querwandungen 17.1-17.4 verankert, welche den Innenraum des Mantelrohres in sechs Meßbereiche M1-M6 unterteilen. Mit der Meßproben-Entnahmevorrichtung können gleichzeitig aus jedem der sechs Meßbereiche M1-M6 Meßproben an Bodengasen oder Grundwasser entnommen werden.

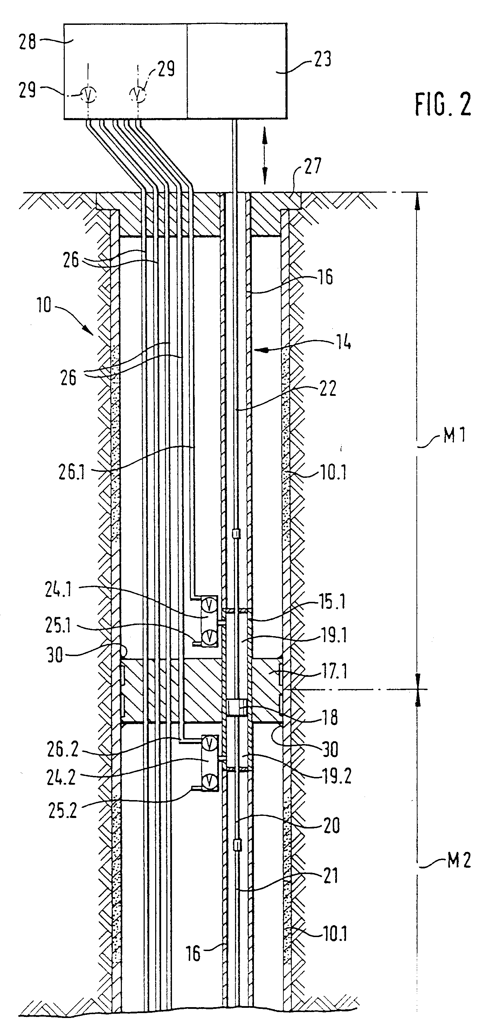

Wie aus Fig. 2 ersichtlich ist, weist das Mantelrohr 10, das in nicht dargestellter Weise aus mehreren Rohrabschnitten zusammengesetzt sein kann, gas- und flüssigkeitsdurchlässige Wandungsabschnitte 10.1 auf. In jedem der in Fig. 1 gekennzeichneten Meßbereiche M1-M6 ist ein solcher durchlässiger Wandungsabschnitt 10.1 vorgesehen, durch welchen Bodengase oder Grundwasser aus den benachbarten Bodenschichten B1-B7 in das Innere des Mantelrohres eindringen können. Der üblicherweise vorhandene Zwischenraum zwischen der nicht dargestellten Brunnenschachtwandung und der Außenwandung des eingesetzten Mantelrohres 10 wird in an sich bekannter Weise mittels eines durchlässigen Materials, wie Kies oder grober Sand, aufgefüllt, wobei in diese Auffüllung in den Bereichen zwischen den durchlässigen Wandungsabschnitten 10.1 des Mantelrohres Dichtungsschichten aus Bentonit eingebracht werden, um Ausgleichsströmungen zwischen den einzelnen Meßbereichen entlang der Mantelrohrwandung zu verhindern.

Der zwischen zwei Distanzrohren 16 angeordnete Zylinder 15.1 weist zwei durch einen Kolben 18 voneinander getrennte Zylinderkammern 19.1 und 19.2 auf. Die durchgehende Kolbenstange 20 der Zylinder/Kolbenanordnung ist nach unten über eine koaxiale Verbindungsstange 21 mit der Kolbenstange des nächsten Zylinders 15.2 verbunden. Nach oben ist die durchgehende Kolbenstange 20 über eine Kupplungsstange 22 mit einer pneumatischen, hydraulischen, elektromotorischen oder auch handbetätigbaren mechanischen Antriebsvorrichtung 23 verbunden, mit welcher den Kolben 18 aller Zylinder 15.1-15.4 eine gleichzeitige Bewegung nach oben oder nach unten erteilt werden kann. Die Antriebsvorrichtung ist in nicht dargestellter Weise mit einer Einrichtung zur Steuerung der Hubgeschwindigkeit und/oder für eine automatische Umsteuerung der Hubrichtung versehen.

Jede der beiden Zylinderkammern 19.1, 19.2 ist über ein aus zwei Einwegventilen zusammengesetztes Wechselventil 24.1 oder 24.2 einerseits mit einer beim dargestellten Ausführungsbeispiel nur kurzen Saugleitung 25.1 oder 25.2 und anderseits mit einer Druckleitung 26.1 oder 26.2 verbunden. Die nur als dicke Striche dargestellten Druckleitungen 26.1, 26.2 und die entsprechenden Druckleitungen 26 der anderen eingesetzten Zylinder 15.2-15.4 sind im Mantelrohr 10 durch passende Öffnungen in den Querwandungen 17 (z.B. 17.1) und eine obere Abdichtkappe 27 des Mantelrohres hindurch nach außen zu einer Probenentnahmestation 28 geführt. In diese Druckleitungen 26 können Drosselstellen 29 oder Druckbegrenzer eingefügt sein. Die Saugleitungen 25 können auch in andere Meßbereiche führen.

Die Querwandungen 17 sind kolbenartig mit äußeren, aus Fig. 2 ersichtlichen Dichtlippen 30 ausgebildet. Die Querwandung 17.1 ist so auf dem Zylinder 15.1 angeordnet, daß das der oberen Zylinderkammer 19.1 zugeordnete Wechselventil 24.1 dem obersten Meßbereich M1 und das mit der unteren Zylinderkammer 19.2 verbundene Wechselventil 24.2 dem anschließenden Meßbereich M2 zugeordnet ist. Bei einer Verstellbewegung der Kupplungsstange 22 und damit des Kolbens 18 in Fig. 2 nach oben wird durch die Ansaugleitung 25.2 des Wechselventiles 24.2 Bodenluft, Grundwasser oder beides aus dem Meßbereich M2 in die Zylinderkammer 19.2 eingesaugt, während gleichzeitig aus der oberen Zylinderkammer 19.1 vorher in diese Zylinderkammer eingesaugte Bodenluft, Grundwasser oder beides aus dem Meßbereich M1 über die Druckleitung 26.1 in die Probenentnahmestelle 28 hochgefördert wird. Bei einer Abwärtsbewegung des Kolbens 18 werden dagegen Fluide aus dem Meßbereich M1 durch die Ansaugleitung 25.1 in die obere Zylinderkammer 19.1 eingesaugt, während vorher in die untere Zylinderkammer 19.2 eingesaugte Fluide aus dem Meßbereich M2 über das Wechselventil 24.2 in die Druckleitung 26.2 und hoch in die Probenentnahmestelle 28 gefördert werden.

Die Kolbenhubbewegung ist in der Regel relativ langsam, um beim Ansaugen der Bodengase oder des Grundwassers in den einzelnen Meßbereichen keinen zu großen Unterdruck in den Meßbereichen zu erzeugen, der das Meßergebnis verfälschen könnte. Der Druck in jeder Tiefe kann beibehalten werden. In Fig. 1 sind am Mantelrohr 10 angebrachte Schwingungserzeuger 31 angedeutet, mit welchen in die dortigen Bodenbereiche B2 und B6 mechanische Schwingungen begrenzter Energie eingeleitet werden können, durch welche in den Kapillaren der Bodenschichten molekulare Gas- und/oder Flüssigkeitsbewegungen ausgelöst werden, mit welchen Verunreinigungen auch aus dem Kapillarbereich dieser Bodenschichten in die Meßbereiche M2 und M5 gebracht werden können.

Das Mantelrohr 10 kann auch in seinem oberen Bereich mit einem nicht dargestellten Schwimmer versehen werden, um die Vorrichtung zur Untersuchung offener Gewässer einsetzen zu können. Wenn die Wandung des Mantelrohres 10 und der Distanzrohre 16 aus Plexiglas besteht, kann in das Mantelrohr 10 eine Kamera zur Beobachtung der Strömung in den angrenzenden Gewässerschichten eingeführt werden.

## Patentansprüche

1. Meßproben-Entnahmevorrichtung für mehrere voneinander entfernte Meßstellen, insbesondere für Grundwasser- oder Bodenluftuntersuchungen, umfassend
a) ein in eine Bodenöffnung (11) einbringbares Mantelrohr (10) mit einer mindestens in den vorgesehenen Meßstellenbereichen (M1 bis M6) gas- und flüssigkeitsdurchlässigen Wandung (10.1);
b) in das Mantelrohr (10) jeweils zwischen den einzelnen Meßstellenbereichen (M1 bis M6) einsetzbare Querwandungen (17.1 bis 17.4) mit verschließbaren Öffnungen für Meßleitungen und einen Pumpeinheitsstrang (14);
c) einen mehrere koaxial angeordnete Pumpeinheiten (15.1 bis 15.4) aufweisenden Pumpeinheitsstrang (14), bei welchem die Antriebe (20) aller Pumpeinheiten (15.1 bis 15.4) miteinander und mit einer gemeinsamen Antriebsvorrichtung (23) gekoppelt sind;
d) die Verbindung jeder Pumpeinheitskammer (19.1, 19.2) des Pumpeinheitsstranges (14) über ein Wechselventil (24.1, 24.2) mit einer jeweils in einem Meßstellenbereich (M1 bis M6) endenden Saugleitung (25.1, 25.2) und mit einer jeweils zu einer gesonderten Probenentnahmestelle führenden Druckleitung (26.1, 26.2),
dadurch gekennzeichnet, daß die Pumpeinheiten als Zylinder (15.1 bis 15.4) ausgeführt sind, bei welchen die Kolbenstangen (20) aller Zylinder miteinander und mit einer gemeinsamen Antriebsvorrichtung (23) gekoppelt sind.

2. Meßproben-Entnahmevorrichtung nach Anspruch 1, dadurch gekennzeichnet, daß die Querwandungen (17.1-17.4) als mit Umfangsdichtlippen (30) versehene, dicht in das Mantelrohr (10) passende Wandungskörper ausgebildet sind.

3. Meßproben-Entnahmevorrichtung nach Anspruch 1 und 2, dadurch gekennzeichnet, daß die Querwandungen (17.1-17.4) mit dem Zylinderstrang (14) verbunden sind.

4. Meßproben-Entnahmevorrichtung nach einem der Ansprüche 1 bis 3, dadurch gekennzeichnet, daß die Zylinder (15.1.-15.4) des Zylinderstranges (14) mindestens teilweise als Doppelkammerzylinder ausgebildet sind, von denen jede Zylinderkammer (19.1, 19.2) mit einem anderen Meßstellenbereich (M1, M2) verbunden ist.

5. Meßproben-Entnahmevorrichtung nach einem der Ansprüche 1 bis 4, dadurch gekennzeichnet, daß in dem Zylinderstrang (14) zwischen den einzelnen Zylindern (15.1-15.4) koaxiale Distanzrohre (16) angeordnet sind.

6. Meßproben-Entnahmevorrichtung nach einem der Ansprüche 1 bis 5, dadurch gekennzeichnet, daß der Zylinderstrang (14) außermittig in dem Mantelrohr (10) angeordnet ist.

7. Meßproben-Entnahmevorrichtung nach einem der Ansprüche 1 bis 6, dadurch gekennzeichnet, daß die zu den Probenentnahmestellen (28) führenden Druckleitungen (26) über Drosselstellen (29) geführt sind.

8. Meßproben-Entnahmevorrichtung nach einem der Ansprüche 1 bis 7, dadurch gekennzeichnet, daß die gemeinsame Antriebsvorrichtung (23) für die Kolbenstangen (20) mit einer Bewegungssteuereinrichtung und/oder einer automatischen Steuereinrichtung für die Kolbenstangen-Hubumkehr versehen ist.

9. Meßproben-Entnahmevorrichtung nach einem der Ansprüche 1 bis 8, dadurch gekennzeichnet, daß am Mantelrohr (10) mindestens ein Schwingungserzeuger (31) angeordnet ist, der, bei Verwendung der Vorrichtung zu Bodenuntersuchungen, in den angrenzenden Bodenbereich (B2, B6) mechanische Schwingungen begrenzter Energie abgibt, dergestalt, daß die Schwingungen in den Kapillaren der Bodenschichten molekulare Gas- und/oder Flüssigkeitsbewegungen auslösen.

10. Meßproben-Entnahmevorrichtung nach einem der Ansprüche 1 bis 9 für die Verwendung in offenen Gewässern, dadurch gekennzeichnet, daß am Mantelrohr (10) ein Schwimmer angeordnet ist.

11. Meßproben-Entnahmevorrichtung nach Anspruch 10, dadurch gekennzeichnet, daß das Mantelrohr (10) aus einem durchsichtigen Material gefertigt ist und daß das Mantelrohr weiter so ausgebildet ist, daß eine Kamera und/oder andere optische Einrichtungen zur Beobachtung der Wasserströmung in das Mantelrohr einführbar sind.

12. Meßproben-Entnahmevorrichtung nach Anspruch 5 und 11, dadurch gekennzeichnet, daß auch die Distanzrohre (16) aus einem durchsichtigen Material gefertigt sind.

## Claims

1. Measuring sample collector for a plurality of distanced measuring points, in particular for ground-water or ground-air examinations comprising
a) a casing pipe (10) for insertion into a ground opening (11), comprising a wall (10.1) which is, at least in the provided measuring areas (M1 to M6), gas- and fluid-permeable;
b) transverse walls (17.1 to 17.4) for insertion into the casing pipe (10) between the individual measuring areas (M1 to M6) with sealable openings for measuring pipes and a pump unit extrusion (14);
c) a pump unit extrusion (14) comprising a plurality of coaxially arranged pump units (15.1 to 15.4), with the drives (20) of all pump units (15.1 to 15.4) being interconnected and connected to a common drive unit (23);
d) a connection of each pump unit chamber (19.1, 19.2) of the pump unit extrusion (14) via a change-over valve (24.1, 24.2) to a vacuum pipe (25.1, 25.2), which terminates in a measuring area (M1 to M6), and with a pressure pipe (26.1, 26.2), which connects to a respective separate sampling point, **characterized in that** the pump units are cylinders (15.1 to 15.4) with the piston rods (20) of all cylinders being inter-connected and connected to a common drive unit (23).

2. Measuring sample collector according to claim 1, **characterized in that** the transverse walls (17.1 - 17.4) are structured as wall elements which are provided with peripheral sealing gaskets (30) which fit tightly into the casing pipe (10).

3. Measuring sample collector according to claim 1 and 2, **characterized in that** the transverse walls (17.1 - 17.4) are connected to the cylinder extrusion (14).

4. Measuring sample collector according to one of claims 1 to 3, **characterized in that** the cylinders (15.1. - 15.4) of the cylinder extrusion (14) are at least partially structured as double-chamber cylinders, of which each cylinder chamber (19.1, 19.2) is connected to another measuring area (M1, M2).

5. Measuring sample collector according to one of claims 1 to 4, **characterized in that** coaxial spacer pipes (16) are arranged in the cylinder extrusion (14) between the individual cylinders (15.1 - 15.4).

6. Measuring sample collector according to one of claims 1 to 5, **characterized in that** the cylinder extrusion (14) is eccentrically arranged in the casing pipe (10).

7. Measuring sample collector according to one of claims 1 to 6, **characterized in that** the pressure pipes (26) which connect to the sampling points (28) pass through throttle points (29).

8. Measuring sample collector according to one of claims 1 to 7, **characterized in that** the common drive unit (23) for the piston rods (20) is provided with a movement control device and/or an automatic control device for stroke reversal of the piston rods.

9. Measuring sample collector according to one of claims 1 to 8, **characterized in that** the casing pipe (10) carries at least one oscillator (31) which, when the device is used for ground examinations, generates mechanical oscillations of defined energy in the adjacent ground area (B2, B6), so that the oscillations generate molecular gas and/or fluid movements in the capillaries of the ground layers.

10. Measuring sample collector according to one of claims 1 to 9 for use in open waters, **characterized in that** a floater is fitted to the casing pipe (10).

11. Measuring sample collector according to claim 10, **characterized in that** the casing pipe (10) is made of a transparent material and that the casing pipe is structured in such a manner that a camera and/or other optical devices for observation of the water flow can be inserted into the casing pipe.

12. Measuring sample collector according to claim 5 and 11, **characterized in that** the spacer pipes (16) are also made of a transparent material.

## Revendications

1. Dispositif de prélèvement d'échantillons de mesure pour plusieurs points de mesure éloignés les uns des autres, en particulier pour des sondages d'eau souterraine ou d'air du sol, comprenant :
a) un tube de revêtement (10) pouvant être logé dans une ouverture du sol (11) avec une paroi perméable aux liquides (10.1) au moins dans les zones de point de mesure prévues (M1 à M6) ;
b) des parois transversales (17.1 à 17.4) pouvant être insérées dans le tube de revêtement (10) respectivement entre les différentes zones de point de mesure (M1 à M6) avec des ouvertures obturables pour des câbles de mesure et une ligne d'unités de pompage (14) ;
c) une ligne d'unités de pompage (14) présentant plusieurs unités de pompage (15.1 à 15.4) disposées coaxialement, sur laquelle les entraînements (20) de toutes les unités de pompage (15.1 à 15.4) sont couplés les uns aux autres et à un dispositif d'entraînement commun (23) ;
d) la liaison de chaque chambre d'unité de pompage (19.1, 19.2) de la ligne d'unités de pompage (14) par l'intermédiaire d'une vanne à deux voies (24.1, 24.2) à une conduite d'aspiration respective (25.1, 25.2) se terminant dans une zone de point de mesure (M1 à M6) et à une conduite sous pression respective (26.1, 26.2) conduisant à un point de prélèvement d'échantillon séparé,
caractérisé en ce que les unités de pompage sont réalisées comme des cylindres (15.1 à 15.4) dans lesquels les tiges de piston (20) de tous les cylindres sont couplées les unes aux autres et à un dispositif d'entraînement commun (23).

2. Dispositif de prélèvement d'échantillons de mesure selon la revendication 1, caractérisé en ce que les parois transversales (17.1-17.4) sont formées comme des corps de paroi munis de lèvres d'étanchéité périphériques (30) s'adaptant de façon étanche dans le tube de revêtement (10).

3. Dispositif de prélèvement d'échantillons de mesure selon les revendications 1 et 2, caractérisé en ce que les parois transversales (17.1-17.4) sont reliées à la ligne de cylindres (14).

4. Dispositif de prélèvement d'échantillons de mesure selon l'une des revendications 1 à 3, caractérisé en ce que les cylindres (15.1-15.4) de la ligne de cylindres (14) sont formés au moins partiellement comme des cylindres à chambre double dont chaque chambre de cylindre (19.1, 19.2) est reliée avec une autre zone de point de mesure (M1 à M2).

5. Dispositif de prélèvement d'échantillons de mesure selon l'une des revendications 1 à 4, caractérisé en ce que des tubes d'écartement coaxiaux (16) sont disposés dans la ligne de cylindres (14) entre les différents cylindres (15.1-15.4).

6. Dispositif de prélèvement d'échantillons de mesure selon l'une des revendications 1 à 5, caractérisé en ce que la ligne de cylindres (14) est disposée excentriquement dans le tube de revêtement (10).

7. Dispositif de prélèvement d'échantillons de mesure selon l'une des revendications 1 à 6, caractérisé en ce que les conduites sous pression (26) conduisant aux points de prélèvement d'échantillon (28) sont conduites à travers des points d'étranglement (29).

8. Dispositif de prélèvement d'échantillons de mesure selon l'une des revendications 1 à 7, caractérisé en ce que le dispositif d'entraînement commun (23) pour les tiges de piston (20) est muni d'un dispositif de commande de déplacement et/ou d'un dispositif de commande automatique pour l'inversion élévatoire des tiges de piston.

9. Dispositif de prélèvement d'échantillons de mesure selon l'une des revendications 1 à 8, caractérisé en ce que près du tube de revêtement (10) est disposé au moins un générateur de vibration (31) qui produit des vibrations mécaniques d'énergie limitée dans la zone limitrophe au sol (B2, B6) lors de l'utilisation du dispositif pour des sondages de sol, de sorte que les vibrations provoquent des déplacements de gaz et/ou liquide moléculaires dans les capillaires des couches de sol.

10. Dispositif de prélèvement d'échantillons de mesure selon l'une des revendications 1 à 9 pour utilisation dans des eaux ouvertes, caractérisé en ce qu'un flotteur est disposé près du tube de revêtement (10).

11. Dispositif de prélèvement d'échantillons de mesure selon la revendication 10, caractérisé en ce que le tube de revêtement (10) est fabriqué en une matière transparente et en ce que le tube de revêtement est en outre formé de sorte qu'une caméra et/ou d'autres dispositifs optiques peuvent être introduits dans le tube de revêtement pour observer le courant d'eau.

12. Dispositif de prélèvement d'échantillons de mesure selon l'une des revendications 1 à 11, caractérisé en ce que les tubes d'écartement (16) sont fabriqués en une matière transparente.
